## Europäisches Patentamt
## European Patent Office
## Office européen des brevets

(11) Publication number: **0 159 800**
**B1**

# EUROPEAN PATENT SPECIFICATION

(45) Date of publication of patent specification: **27.12.89**

(51) Int. Cl.⁴: $G\ 01\ B\ 11/02$

(21) Application number: **85301847.1**

(22) Date of filing: **15.03.85**

(54) **Micro-dimensional measurement apparatus.**

(30) Priority: **20.04.84 JP 79772/84**

(43) Date of publication of application:
**30.10.85 Bulletin 85/44**

(45) Publication of the grant of the patent:
**27.12.89 Bulletin 89/52**

(84) Designated Contracting States:
**DE FR**

(56) References cited:
EP-A-0 013 325
DE-A-2 500 458
US-A-3 907 439
US-A-4 125 317
US-A-4 385 837

PATENT ABSTRACTS OF JAPAN, vol. 7, no. 212
(P-224)1357r, 20th September 1983 & JP-A-58-
106 415

PATENT ABSTRACTS OF JAPAN, vol. 7, no. 96
(P-193)1241r, 22nd April 1983 & JP-A-58-21 505

(73) Proprietor: **Citizen Watch Co. Ltd.**
**2-1-1 Nishi-Shinjuku**
**Shinjuku-Ku Tokyo (JP)**

(72) Inventor: **Fujita, Hiroo**
**6-1-12, Hon-cho**
**Tanashi-City Tokyo (JP)**

(74) Representative: **Sturt, Clifford Mark et al**
**MARKS & CLERK 57-60 Lincoln's Inn Fields**
**London WC2A 3LS (GB)**

Courier Press, Leamington Spa, England.

# Description

In recent years, there has been an ever-increasing amount of manufacturing to a very high degree of dimensional precision. As a result, there is an urgent need for simple non-contact means for measuring minute values of dimensions with high accuracy, which can be put to practical use in an actual manufacturing environment rather than in the controlled environment of a laboratory. Such dimensional measurement is primarily concerned with the measurement of distances between edges upon a surface of an object, e.g. outer edges of a surface or the edges of raised or recessed portions of a surface.

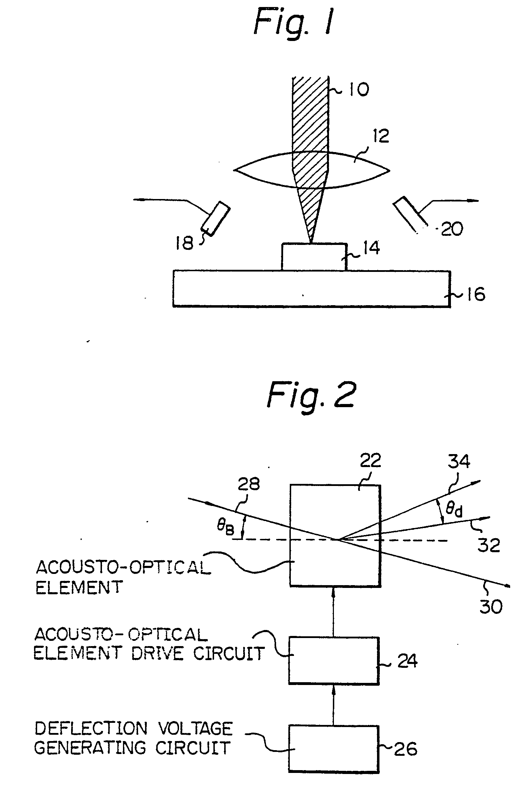

One method which has been proposed in the prior art to accomplish this is to direct a beam of light onto the surface concerned, and to arrange one or more photo-sensors such as to detect the intensity of the resultant light reflected from the surface. The body under measurement is mounted upon a movable stage, e.g. movable in an X—Y manner, for example as shown in Fig. 1 of the drawings in which a body 14 is mounted on a movable stage 16, with a beam of light 10 being focused to form a small spot on the upper face of body 14 by a lens 12. Photo-sensors 18 and 20 are disposed with respect to the position of incidence of the light beam 10 such as to receive reflected light from the surface. With such an arrangement, the intensity of reflected light sensed by sensors 18, 20 is a minimum when light beam 10 falls upon a portion of the surface of body 14 which is flat and aligned perpendicular to the direction of incidence of light beam 10, while the intensity of the sensed reflected light is a maximum when the light beam 10 is incident upon a portion of the surface of body 14 which is substantially inclined with respect to the direction of incidence of light beam 10, i.e. at an edge of object 14. In this way, the position of an edge can be detected as a change in the intensity of the reflected light sensed by sensors 18, 20 as body 14 is moved with respect to light beam 10. However such an arrangement has various fundamental disadvantages. Firstly, it is necessary to position the photo-sensors very precisely with respect to the position of incidence of light beam 10 on object 14. Secondly, the method is based upon changes in the absolute magnitude of the reflected light, which will of course vary considerably between an edge portion which is relatively shallow and one which is relatively deep. Thirdly, due to the use of mechanical movement of the body under measurement, in order to scan light beam 10 over the body surface, irregularities of movement of the body will produce corresponding errors of measurement, so that such a method cannot be used for measurement of dimensions to a very high degree of accuracy.

An example of the above mentioned prior art is described in an article entitled "Image Sensors and Image Processing" which appeared in the Japanese magazine "Denshi Gijutsu" No. 5, Vol. 20 published in May 1978. The article was written by Mr M. Naruse and Mr K. Kawada of NEC Corporation. Additionally, document EP—A—0013325 and US—A—3907439 disclose similar arrangements. Document EP—A—0013325 and US—A—3907439 both disclose electro optical sensor arrangements which can be used for precise position location.

There is therefore a requirement for a non-contact form of apparatus for measuring minute distances between edges of a surface on an object which will overcome the disadvantages of the prior art as described above, yet which will be simple and practical. Such an apparatus is disclosed by the present invention.

A micro-dimensional measurement apparatus according to the present invention differs from the prior art apparatus described above in that a light beam is scanned over the body surface under measurement by electrically controlled deflection means, with the body being held fixed in position. Furthermore, a micro-dimensional measurement apparatus according to the present invention performs detection of edges by processing the values of intensity of reflected light, as the light beam scans over the body surface, such as to determine when the rate of change of the reflected light intensity reaches a maximum. It has been found that each of such maximum values corresponds to an edge formed on the body surface, to a high degree of reliability and accuracy. As in the prior art, the intensity of reflected light is measured by utilizing a photo-sensor. However since the rate of change of reflected light intensity is utilized, rather than the intensity of the reflected light, it becomes unnecessary to position the body surface under measurement very precisely with respect to the photo-sensor, and in addition the apparatus can be employed to measure edge dimensions on bodies having various types of surface configuration. Thus, a micro-dimensional measurement apparatus according to the present invention is much more practical and flexible in application than prior art types of such apparatus, and can be readily employed for in-house measurement applications in an industrial environment.

According to the present invention there is provided a micro-dimensional measurement apparatus for measuring the distance between at least two edges formed upon a surface of an object, characterized by an acousto-optical element; acousto-optical element drive means for generating ultrasonic acoustic travelling waves within said acousto-optical element; deflection voltage generating circuit coupled to said acousto-optical element drive means for applying a deflection voltage thereto such that the level of said deflection voltage determines the frequency of said ultrasonic acoustic travelling waves; a light source for generating a light beam, and first optical element means for shaping and directing said light beam such as to pass through said acousto-optical element and be thereby deflected by an angle which is determined by the frequency of said ultrasonic acoustic travelling waves;

second optical element means disposed to modify the shape of said light beam emerging from said acousto-optical element; third optical element means disposed to direct said light beam emerging from said second optical element means onto said body surface and to focus said light beam to form a spot of light having microscopic diameter upon said body surfaces; photo-sensor means disposed to receive reflected light from said body surface resulting from said light beam impinging thereon, for producing an electrical signal indicative of the intensity of said reflected light; deflection control circuit means for controlling said deflection voltage generating circuit means such as to vary the level of said deflection voltage at a predetermined rate to thereby correspondingly vary the frequency of said ultrasonic acoustic travelling waves and so vary said angle of deflection of said light beam to thereby scan said light beam across said body surface at a corresponding speed; and data processing circuit means for processing said signal from said photo-sensor means such as to detect conditions of maximum rate of change of intensity of said reflected light, said conditions respectively corresponding to said light beam successively impinging upon said edges, and for measuring the distance between said at least two edges as represented by the difference between the values of said deflection voltage corresponding respectively to said conditions of maximum rate of change of reflected light intensity.

Embodiments of the invention will now be described by way of example and with reference to the accompanying drawings, in which:

Fig. 1 is a simplified diagram to illustrate the basic principles of a micro-dimensional measurement apparatus for measuring distances between edges according to the prior art;

Fig. 2 is a simple block diagram to illustrate the basic principles of a system for electrically controlled deflection of a scanning light beam used in a micro-dimensional measurement apparatus according to the present invention;

Fig. 3 is a block diagram of an embodiment of a micro-dimensional measurement apparatus according to the present invention;

Figs. 4A and 4B are diagrams illustrating an optical system used in the embodiment of Fig. 3;

Figs. 5A and 5B are waveform diagrams illustrating methods of varying a deflection voltage of the embodiment of Fig. 3 such as to minimize the scanning time required for dimensional measurement;

Fig. 6 is a graph illustrating the relationship between deflection efficiency and deflection voltage for an acousto-optical element used in the embodiment of Fig. 3; and

Figs. 7A to 7D illustrate a modification of the embodiment of Fig. 3 whereby the relationship between reflected light intensity and deflection voltage applied to control deflection of a scanning light beam is approximated to a mathematical function.

Fig. 2 is a simplified block diagram to illustrate a combination of an acousto-optical element and a control system for controlling the amount of deflection of a light beam produced by the acousto-optical element, suitable for use in a micro-dimensional measurement apparatus according to the present invention. Numeral 22 denotes an acousto-optical element which basically comprises an electro-acoustic transducer and an optically transparent medium. A light beam 28, which will be assumed to be produced by a He-Ne laser, is directed to be incident on a face of acousto-optical element 22 at the Bragg angle $\theta_B$. An acousto-optical element drive circuit 24 generates a high-frequency drive signal, at a frequency determined by the level of a deflection voltage applied thereto from a deflection voltage generating circuit 26, with this drive signal being applied to the electro-acoustic transducer within acousto-optical element 22. As a result, ultrasonic acoustic travelling waves are generated within the medium of acousto-optical element 22, which produced periodic changes in the index of refraction of that medium, which thereby functions as a form of diffraction grating for light which is incident thereon at an angle close to the Bragg angle, and so deflects the major portion of light beam 28 by an angle whose magnitude is determined by the frequency of the ultrasonic acoustic travelling waves. In this way, the emerging deflected light beam 34 from acousto-optical element 22 can be swept in a continuous manner through a range of deflection angles, by variation of the output voltage from deflection voltage generating circuit 26.

Part of the incident light beam 28 passes through acousto-optical element 22 without being deflected, and is indicated by numeral 30 in Fig. 2. This undiffracted light will be ignored in the following description.

The acousto-optical element drive circuit 24 comprises a voltage-controlled oscillator (VCO), and a high-frequency power amplifier for amplifying the VCO output signal, with the output voltage from deflection voltage generating circuit 26 being applied as a frequency control voltage to the VCO.

It may be arranged, for example that when the value of deflection voltage from circuit 26 is zero, the output frequency from acousto-optical element drive circuit 24 is 90 MHz, while when the deflection voltage is raised to 1 V, the output frequency is 50 MHz. Thus, for example, the deflection of light beam 32 in Fig. 2 might result with a drive frequency of 90 MHz, i.e. with a deflection voltage level of zero, and the deflection angle of light beam 34 be produced with a drive frequency of 50 MHz applied to acousto-optical element 22, i.e. with a deflection voltage level of 1 V from deflection voltage generating circuit 26. In this case, the value of the difference $\theta_D$ between the deflection angles of light beams 32 and 34 is given as follows:

$$\theta_D = \lambda \cdot f_s / V_a$$

Here, $\lambda$ is the wavelength of the laser light beam 28, $f_s$ is the change in frequency of the ultrasonic acoustic travelling waves produced by acousto-optical element drive circuit 24 to bring about the change in deflection angle $\theta_D$. In the example above, this would be (90−50)=40 MHz. $V_a$ is the speed of travel of sound within the medium of acousto-optical element 22.

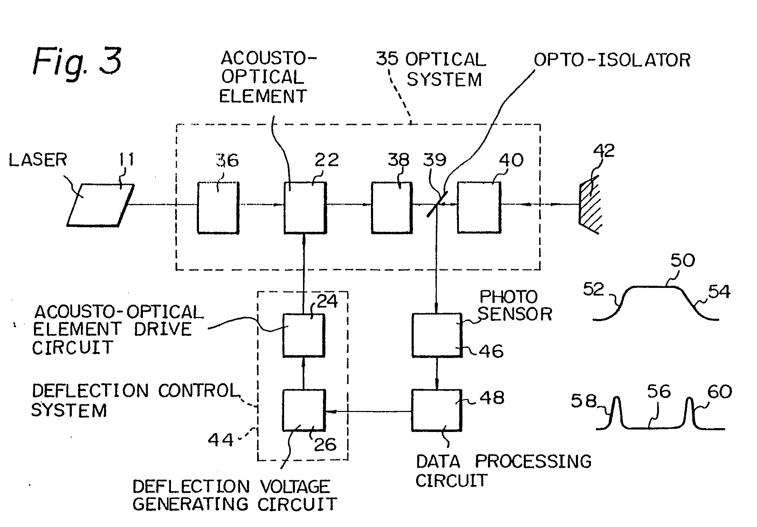

Fig. 3 shows a simple block diagram of an embodiment of a micro-dimensional measurement apparatus according to the present invention. Reference numeral 11 denotes a laser unit, employing for example a He-Ne laser. The output light beam from this laser enters an optical system 35, incorporating the acousto-optical element 22 described above, which acts to focus the laser light beam as a small-diameter spot upon the surface of body 42 which is to be measured, and to scan the light beam across the body surface under the control of drive signals from a deflection control system 44 applied to acousto-optical element 22. Optical system 35 further comprises a first group of optical elements 36, which act to convert the beam shape (i.e. as seen in cross-section) of the output light beam from laser unit 11 to a suitable shape for interacting with the refracting medium of acousto-optical element 22. The emerging light beam from acousto-optical element 22 enters a second group of optical elements 38, which restores the original beam shape of the laser light beam, and the output light beam from acousto-optical element 22 is passed through a third group of optical elements 40, which act to focus the laser light beam to form a spot of minute diameter upon the body surface 42 to be measured. An opto-isolator 39 serves to transmit the light beam from second group of optical elements 38 to third group of optical elements 40, while directing the reflected light from body surface 42 towards a photosensor 46. The deflection provided by acousto-optical element 22 is controlled by a deflection control system 44, comprising a deflection voltage generating circuit 26 and acousto-optical element drive circuit 24 as described hereinabove.

As stated above, deflection of the light beam, and hence scanning of the light beam across body surface 42, is performed in accordance with changes in the level of a deflection voltage produced by deflection voltage generating circuit 26. Such changes in the deflection voltage can be produced by applying suitable input signals to deflection voltage generating circuit 26, e.g. signals commanding deflection voltage generating circuit 26 to produce a deflection voltage varying as a linearly increasing ramp waveform voltage. Means for commanding the operation of deflection voltage generating circuit 26 in this way, to thereby determine the rate of scanning of the light beam across body surface 42, will be broadly referred to in the following description and the appended claims as deflection control circuit means. In the present embodiment, this function is performed by a data processing circuit 48, i.e. successively varying digital or analog type signals applied from data processing circuit 48 to deflection voltage generating circuit 26 serve to determine the output voltage level produced from deflection voltage generating circuit 26 and hence the amount of deflection produced by acousto-optical element 22. However various other arrangements can be envisaged, so long as data representing the successive values of deflection voltage level from deflection voltage generating circuit 26 is made available to data processing circuit 48 for use in computing distances between surface edges, as described hereinafter.

Photo-sensor 46 produces a signal which varies in accordance with the intensity of reflected light from body surface 42, and this signal is input to a data processing circuit 48 to be processed thereby. The form of variation of the reflected light intensity is illustrated by numeral 50, and as shown the reflected light intensity varies most rapidly when the light beam scans across an edge portion of body surface 42, e.g. as indicated by numerals 52 and 54. Data processing circuit 48 successively produces differential values of the output signal from photosensor 46, with these values reaching peaks of magnitude when the light beam scans over an edge portion of body surface 42, e.g. as indicated by numerals 58, 60. More specifically, it is arranged in this embodiment that the reflected light intensity is a maximum when the light beam scans across a plane portion of body surface 42 which is disposed perpendicular to the direction of incidence of the beam, and a minimum when the light beam falls upon an edge face which is oriented substantially perpendicular to such a plane portion.

It is important to note that such differential peak values provides a very precise indication of edge position, since they correspond to movement of the scanning light beam (which is focused by third group of optical elements 40 to a spot of light only a few micronmeters in diameter upon the body surface 42) across the junction of two surface faces of sharply differing slope, i.e. a corner. Thus the actual difference in slope between these faces, forming an edge, will have only a limited effect upon the accuracy of sensing the edge position. As stated above, only peak values of the rate of change of the reflected light intensity are computed by data processing circuit 48, with the computation being substantially independent of variations in the absolute intensity of the reflected light.

If it is assumed that there is a precisely proportional relationship between changes in the level of deflection voltage produced by deflection voltage generating circuit 26 and corresponding movement of the light beam over body surface 42, then the distance between any two edges, as indicated by peak differential values as described above, will be computed directly by data processing circuit 48 from the difference between the deflection voltage levels at which these peak values occurred. In practice the relationship between deflection voltage and scanning distance will not be linearly proportional over the entire scanning range. However, this problem can be readily overcome by scanning the light beam over a body surface having precisely known edge distances thereon, to thereby determine compensation values needed to perform correction of subsequent distance computations by data processing circuit 48. Such compensation values can be stored in data processing circuit 48 and used thereafter each time an edge distance computation is performed, to thereby perform accurate measurement.

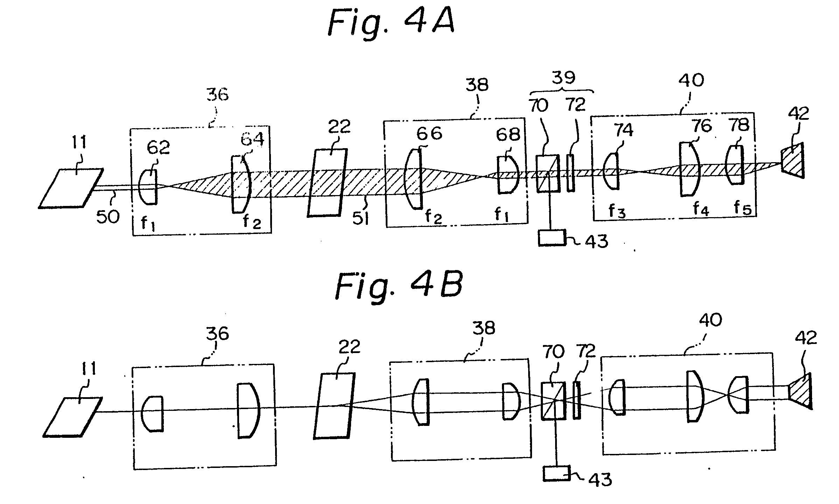

Fig. 4A is a view illustrating the optical system 35 in the embodiment of Fig. 3, as seen perpendicular to the light beam axis and to the direction of maximum beam width, for the condition in which the light beam is deflected to an angle at the center of the deflection range. First group of optical elements 36 comprises a cylindrical lens 62 having focal length $f_1$ and a plano-convex lens 64 having focal length $f_2$. These convert the circular cross-section beam 50 from laser unit 11 to a beam having a flattened elliptical cross-section, with the ratio of the major dimension to the minor dimension of the beam cross-section being equal to $f_2/f_1$.

Designating the diameter of laser output beam 50 as $D_0$, the size of the major dimension of the beam cross-section upon output from lens 64 is equal to $D_0 \cdot f_2/f_1$.

This expansion of the beam width of the light beam is performed in order to increase the duration of mutual interaction between the light beam and the ultrasonic acoustic travelling waves within acousto-optical element 22, to thereby maximize the deflection efficiency of acousto-optical element 22. That is to say, the beam is converted to have a flattened elliptical cross-section, with the major dimension thereof being aligned parallel to the direction of advancement of the ultrasonic acoustic travelling waves.

The output light beam from acousto-optical element 22 is then modified by passing through second group of optical elements 38, which comprises a plano-convex lens 66 of focal length $f_2$ and a cylindrical lens 68 of focal length $f_1$. This symmetrical arrangement of the focal lengths of lenses 62 to 68 results in a light beam having a circular cross-section being output from second group of optical elements 38, and this is passed through an optical isolator 39 made up of a polarizing beam splitter 70 and a 1/4 wavelength plate 72. These serve to rotate the plane of polarization of the light beam from lens 68 by circular polarization, and the resultant light beam then passes through third group of optical elements 40. This comprises a plano-convex lens 74 of focal length $f_3$, a plano-convex lens 76 of focal length $f_4$, and an object lens 78 having focal length $f_5$. The beam diameter is first increased, in the proportion $f_4/f_3$, to become equal to $D_0 \cdot f_4/f_3$. This light beam is then focused by object lens 78, to produce a light spot having a very small diameter when incident upon body surface 42. By suitable selection of the focal lengths of lenses 74, 76 and 78, it is possible to produce a light spot having a diameter of only a few micronmeters.

With such an optical system, the relationship between a change in angle of deflection of the light beam by acousto-optical element 22, designated as $\theta_D$, will produce a corresponding change in position of the light spot incident on body surface 42 of magnitude D, with the relationship between $\theta_D$ and D being as follows:

$$D = f_2 \cdot f_3 \cdot f_5 \cdot \theta_D/(f_1 \cdot f_4)$$

The change in level of deflection voltage output from deflection voltage generating circuit 26 which produces such a magnitude of scanning displacement D will be designated as $V_0$. Then, defining the distance between a pair of edges formed upon a surface under measurement as S (e.g. the distance between the edges which result in differential peak values 58 and 60 shown in Fig. 3), and designating the difference in deflection voltage levels between the point of generation of the first differential peak value and the second differential peak value as V, the following relationship is true:

$$S = D \cdot V/V_0$$

This computation is performed by data processing circuit 48 to measure the distance between two edges.

Fig. 4B shows the path traced out by the central axis of the light beam as the beam is deflected to scan across two edges of body surface 42, by the action of acousto-optical element 22.

The reflected light from body surface 42 passes back through third group of optical elements 40, is again subjected to rotation of the plane of polarization by 1/4 wavelength plate 72, and hence is reflected by beam splitter 70 to be incident upon photo-sensor 43.

In the above embodiment, coherent light from a laser source is utilized to form the scanning light beam. However, it should be noted that this is not an essential feature of the present invention, and that it is possible to use non-coherent unpolarized light. In such a case it would of course be necessary to utilize a different optical isolator arrangement, to separate the paths of the scanning light beam and reflected light, e.g. to use a non-polarizing beam splitter without employing a 1/4 wavelength plate.

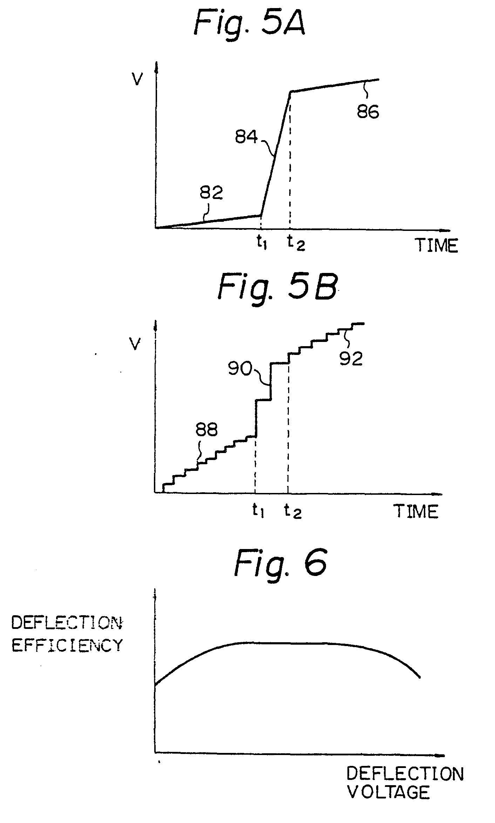

Assuming that various sources of measurement error have been eliminated (e.g. by deriving compensation values beforehand, to be stored and used for compensation of dimension computations, as described hereinabove), the basic limitation upon the precision of measurement by the apparatus is set by the resolution attainable for variation of the deflection voltage produced by deflection voltage generating circuit 26 and by the diameter of the light beam at incidence upon the body surface under measurement. The deflection voltage can be varied in a continuous manner, to scan the light beam continuously across the body surface under measurement, or can be varied in successive step increments, to thereby step the light beam across the body surface. The resolution of variation of the deflection voltage will be increased as the rate of variation (with respect to time) is lowered, while the resolution will decrease as the rate of variation is increased. Thus, a choice must be made between performing measurement by rapidly scanning the light beam over the surface under measurement, with relatively low measurement accuracy, or scanning the light beam slowly across the surface, with a higher degree of measurement accuracy. One method of overcoming this problem is to perform a preliminary measurement to determine the approximate positions of edges upon the body surface concerned, and to memorize these positions, e.g. by data processing circuit 48. Precision measurement can then be performed by scanning the light beam over the body surface at a relatively slow speed in the vicinity of each edge portion on the surface, and to scan the light beam across the surface at a relatively high speed in the plane portions of the surface between the edges to be measured. In the case of continuously varying scanning, this can be accomplished by making the waveform of the deflection voltage from deflection voltage generating circuit 26 have the general form shown in Fig. 5A. Here, the deflection voltage is made to vary relatively slowly, as indicated by numeral 82, as the light beam scans across a portion of the body surface under measurement in which an edge is known to be located. Thereafter, the deflection voltage is made to increase rapidly, as indicated by numeral 84, to sweep the scanning light beam across a portion of the body surface in which no edges are located, so that scanning of this plane portion of the surface is completed in the time interval from $t_1$ to $t_2$. The deflection voltage is then increased once more at a slow rate, as indicated by numeral 86, to scan the light beam across a portion of the body surface in which a second edge is known to be located.

Fig. 5B shows how the deflection voltage can be similarly varied in a stepwise manner, to accomplish the objective described above. In this case, step increments of deflection voltage, as indicated by numeral 88, 92, are employed to scan the light beam across portions of the body surface under measurement in which edges are known to be located, while large amplitude step increments of the deflection voltage, as indicated by numeral 90, are employed to sweep the scanning beam rapidly across each portion of the body surface which is known to be flat.

As stated above, the relationship between the deflection voltage produced by deflection voltage generating circuit 26 and the movement of the focused light beam spot across the body surface under measurement is not accurately linear, although compensation for this can be applied as discussed above. A major reason for this is illustrated in Fig. 6, which is a graph showing the relationship between the deflection voltage applied to acousto-optical element drive circuit 24 and the resultant deflection efficiency of acousto-optical element 22. As shown, this is a linear relationship at the mid-portion of the scanning range, and departs increasingly from linearity at the edges of the range.

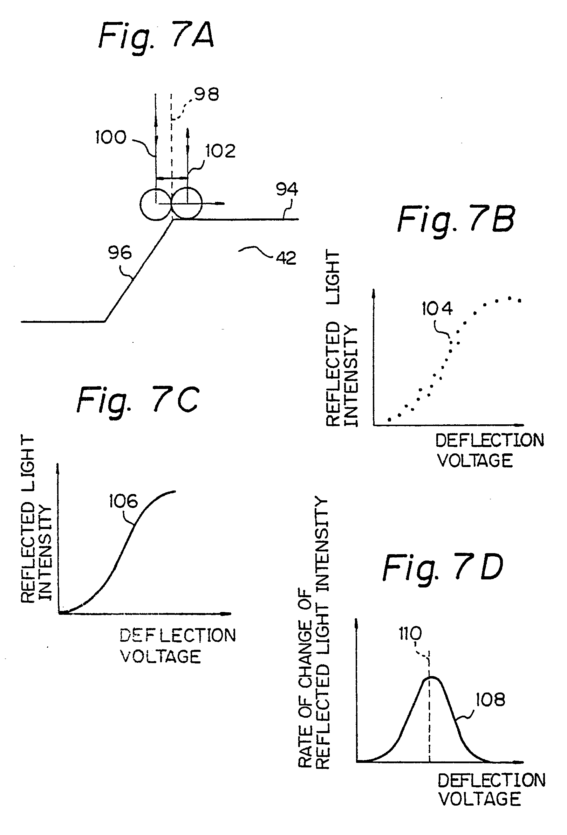

In addition, as stated above, one of the basic factors limiting the attainable measurement accuracy and resolution is the diameter of the scanning light beam at incidence upon the body surface under measurement. This is illustrated in Fig. 7A. As shown, the minimum measurement distance is equal to the light beam diameter, i.e. the distance travelled as the light beam moves from the position indicated by numeral 100 to that indicated by numeral 102. Here it is assumed that an edge, at position 98, is formed between a plane portion 94 and sloping portion 96 of the surface of a body 42, with edge position 98 being disposed midway between scanning beam positions 100, 102. As the light beam moves in the direction indicated by the arrow, from position 100, past edge position 98, to position 102, the reflected light intensity will increase from a minimum to reach a maximum, when the beam becomes incident upon upper plane surface portion 94. However, in actual fact, the detected reflected light intensity signal from photo-sensor 46 in the embodiment of Fig. 3 will not vary smoothly, but will be disturbed by the presence of dust and scratches upon the body surface, and by the effects of external vibration etc. This is illustrated in the graph of Fig. 7B, which shows the detected reflected light intensity (plotted along the vertical axis) with respect to the variation of deflection voltage (plotted along the horizontal axis, assuming that increasing deflection voltage values result in rightward movement of the scanning light beam as viewed in Fig. 7A), for movement of the light beam from positions 100 to 102 shown in Fig. 5A. As can be seen, the resultant relationship displays the effects of extraneous factors as described above, and does not vary in a smooth manner, so that it is difficult to accurately determine the precise value of deflection voltage at which the rate of change of reflected light intensity is a maximum in order to determine the edge position 98.

This problem can be overcome by arranging that data processing circuit 48 first derives a smoothly varying mathematical function which approximates to the set of reflected light intensity values produced by photo-sensor 46 as the light beam scans across the body surface under measurement, then performs processing of this mathematical function to determine the points of maximum rate of variation thereof. These points will accurately represent the positions of edges on the body surface under measurement, with the effects of the extraneous disturbances described above being effectively eliminated.

The variation of reflected light intensity shown in Fig. 7B has integration of basically Gaussian distribution, and it has been found from experiment that such a function can be represented approximately by a third-order or fourth-order polynomial having the general form:

$$y = \sum_{i=0}^{m} a_i \cdot x^i$$

i.e. a function of the form:

$$y = a_0 + a_1 \cdot x + a_2 \cdot x^2 + a_3 \cdot x^3$$

The maximum rate of change of such a function is obtained by differentiating, to obtain:

$$y^1 = a_1 + 2a_2 \cdot x + 3a_3 \cdot x^2$$

Where y corresponds to reflected light intensity and x corresponds to deflection voltage.

Such a polynomial function, which approximates to the set of reflected light intensity data values shown in Fig. 7B, is shown graphically in Fig. 7C, and the result of differentiating this is shown as curve 108 in Fig. 7D. Here, the maximum value of rate of change of reflected light intensity is obtained as the peak of the function obtained by differentiation, i.e. the value of x and hence of deflection voltage at which this maximum occurs (indicating the position of an edge) is as indicated by numeral 110.

Such derivation of a mathematical function approximating to the relationship between deflection voltage and reflected light intensity at each of the edges on the body surface under measurement can be readily accomplished by modern data-processing facilities, i.e. data processing circuit 48 can consist of a suitably programmed microprocessor. The function derived can be modified to incorporate correction data derived beforehand, as described hereinabove, to compensate for non-linearity of the relationship between light beam scanning and the deflection voltage.

Although the embodiments described above are based upon the detection of reflected light from the body surface under measurement, it is equally possible to utilize detection of transmitted light, for certain types of body material.

From the above description, it will be apparent that a micro-dimensional measurement apparatus according to the present invention can have a simple and readily manufactured configuration, yet enables measurement of minute distances between edges on a surface to a very high degree of accuracy. In addition, due to the detection process being based upon variations in the rate of change of reflected light intensity as a scanning beam sweeps across the body surface under measurement, rather than absolute values of reflected light intensity, such an apparatus has very much greater flexibility than prior art apparatus of this type, with regard to positioning relationships between the apparatus and the body under measurement. This flexibility ensures that a microdimensional measurement apparatus according to the present invention can be readily utilized in a practical manufacturing environment. In addition, use of electro-optical scanning means for moving the scanning light beam over the body surface under measurement eliminates the measurement inaccuracies which arise with prior art apparatus due to mechanical movement of the body under measurement with respect to fixed light beam.

Although the present invention has been described in the above with reference to specific embodiments, it should be noted that various changes and modifications to the embodiments may be envisaged, which fall within the scope claimed for the invention as set out in the appended claims. The above specification should therefore be interpreted in a descriptive and not in a limiting sense.

## Claims

1. A micro-dimensional measurement apparatus for measuring the distance between at least two edges formed upon a surface (42) of an object, characterised by an acousto-optical element (22);

acousto-optical element drive means (24) for generating ultrasonic acoustic travelling waves within said acousto-optical element (22);

deflection voltage generating circuit (26) coupled to said acousto-optical element drive means (24) for applying a deflection voltage thereto such that the level of said deflection voltage determines the frequency of said ultrasonic acoustic travelling waves;

a light source (11) for generating a light beam, and first optical element means (36) for shaping and directing said light beam such as to pass through said acousto-optical element (22) and be thereby deflected by an angle which is determined by the frequency of said ultrasonic acoustic travelling waves;

second optical element means (38) disposed to modify the shape of said light beam emerging from said acousto-optical element (22);

third optical element means (40) disposed to direct said light beam emerging from said second optical element means (38) onto said body surface (42) and to focus said light beam to form a spot of light having microscopic diameter upon said body surface (42);

photo-sensor means (46) disposed to receive reflected light from said body surface (42) resulting from said light beam impinging thereon, for producing an electrical signal indicative of the intensity of said reflected light;

deflection control circuit means (44) for controlling said deflection voltage generating circuit (26) such as to vary the level of said deflection voltage at a predetermined rate to thereby correspondingly vary the frequency of said ultrasonic acoustic travelling waves and so vary said angle of deflection of said light beam to thereby scan said light beam across said body surface (42) at a corresponding speed; and

data processing circuit means (48) for processing said signal from said photo-sensor (46) means such as to detect conditions of maximum rate of change of intensity of said reflected light, said conditions respectively corresponding to said light beam successively impinging upon said edges, and for measuring the distance between said at least two edges as represented by the difference between the values of said deflection voltage corresponding respectively to said conditions of maximum rate of change of reflected light intensity.

2. A micro-dimensional measurement apparatus according to claim 1, characterised in that said data processing circuit means (48) further comprises said deflection control circuit means (44).

3. A micro-dimensional measurement apparatus according to claim 1, characterised in that said data processing circuit means (48) detects said conditions of maximum rate of change of intensity of said reflected light by successively computing from said photo-sensor means (46) signal a plurality of differential values each representing the differential of the current rate of change of said reflected light intensity as said light beam scans across said body surface (42), and by discriminating said conditions of maximum rate of change of intensity as corresponding to the peak values of the set of differential values thus derived.

4. A micro-dimensional measurement apparatus according to claim 1, characterised in that said data processing circuit means (48) detects said conditions of maximum rate of change of intensity of said reflected light by deriving a set of values corresponding to a continuously varying mathematical function which approximates to a set of values of said reflected light intensity represented by said photo-sensor means (46) signal, generated as said light beam scans across said body surface (42), and by processing said mathematical function to determine conditions of maximum rate of change thereof.

5. A micro-dimensional measurement apparatus according to claim 1, characterised in that said light source (11) comprises a laser.

6. A micro-dimensional measurement apparatus according to claim 1, characterised in that the approximate position of said edges are measured prior to measurement by said micro-dimensional measurement apparatus and are memorized by said deflection control circuit means (44), and in which said deflection control circuit means (44) thereafter acts to vary the rate of change of said deflection voltage with respect to time relatively slowly while said light beam is scanning across body surface (42) in the vicinity of each of said edges and to vary said rate of change of deflection voltage relatively rapidly while said light beam is scanning across portions of said body surface (42) distant from said edge positions.

7. A micro-dimensional measurement apparatus according to claim 6, characterised in that said deflection control circuit means (44) control said deflection voltage to vary in successive steps of relatively small magnitude while said light beam is scanning across said body surface (42) in the vicinity of each of said edges and in successive steps of relatively large magnitude while said light beam is scanning across portions of said body surface (42) distant from said edge positions.

8. A micro-dimensional measurement apparatus according to claim 1, further characterised by optical isolator means (39) disposed between said second and third optical element means (38, 40), disposed to transmit said light beam emerging from said second optical element means (38) to enter said third optical element means (40) and to reflect said reflected light from said body surface (42), emerging from said third optical element means (40), onto said photo-sensor means (46).

**Patentansprüche**

1. Mikrodimensions-Meßapparat zum Messen des Abstandes zwischen wenigstens zwei Kanten auf der Oberfläche (42) eines Gegenstandes, gekennzeichnet durch:

ein akustisch optisches Element (22);

Antriebsmittel (24) für das akustisch-optische Element, um Ultraschall-Wanderwellen innerhalb des genannten akustisch-optischen Elementes zu erzeugen;

einen Kreis (26) zum Erzeugen einer Ablenkspannung, der mit den Antriebsmitteln (24) des elektro-akustischen Elementes gekoppelt ist, um an diese eine Ablenkspannung anzulegen, und zwar derart, daß das Niveau der Ablenkspannung die Frequenz der Ultraschall-Wanderwellen bestimmt;

eine Lichtquelle (11) zum Erzeugen eines Lichtstrahls und durch erste optische Elementmittel (36), um den Lichtstrahl zu formen und so zu lenken, daß er durch das akustisch-optische Element (22) geht und dadurch um einen Winkel abgelenkt wird, der durch die Frequenz der genannten Ultraschall-Wanderwellen bestimmt wird;

durch zwei optische Elementmittel (38), die so angeordnet sind, daß sie die Form des genannten Lichtstrahls beim Austritt aus dem genannten akustisch-optischen Element (22) modifizieren;

dritte optische Elementmittel (40), die so angeordnet sind, daß sie den aus dem zweiten optischen Elementmittel (38) austretenden Lichtstrahl auf die Oberfläche (42) des Gegenstandes lenken und den Lichtstrahl fokusieren, um einen Lichtpunkt von mikroskopischem Durchmesser auf der Oberfläche (42) des Gegenstandes zu bilden;

durch photoempfindliche Mittel (46), die so angeordnet sind, daß sie das von der Oberfläche (42) des Gegenstandes reflektierte und von dem auf diese auftreffenden Lichtstrahl resultierende Licht empfangen, um ein die Intensität des reflektierten Lichts wiedergebendes elektrisches Signal zu erzeugen;

durch Ablenk-Kontrollkreismittel (44), um den die Ablenkspannung erzeugenden Kreis (26) zu steuern und zwar so, daß das Niveau der Ablenkspannung mit einer vorbestimmten Geschwindigkeit geändert wird und um dadurch entsprechend die Frequenz der Ultraschall-Wanderwellen zu variieren und so auch den Ablenkwinkel des Lichtstrahls zu ändern und damit den Lichtstrahl mit einer korrespondierenden Geschwindigkeit abtastend über die Oberfläche (42) des Gegenstandes zu führen;

durch Datenverarbeitungs-Kreismittel (48), um das Signal von den Photosensormitteln (46) zu verarbeiten, und zwar so, daß Zustände von maximalen Veränderungsgeschwindigkeiten der Intensität des reflektierten Lichts festgestellt werden, wobei diese Zustände jeweils korrespondieren mit dem Nacheinanderauftreffen des Lichtstrahls auf die genannten Kanten, und um den Abstand zwischen wenigstens den beiden genannten Kanten zu messen, wie er durch die Differenz zwischen den Werten der genannten Ablenkspannung repräsentiert wird, welche jeweils mit den Zuständen maximaler Änderungsgeschwindigkeit der Intensität des reflektierten Lichts korrespondieren.

2. Mikrodimensions-Meßapparat nach Anspruch 1, dadurch gekennzeichnet, daß die Datenverarbeitungs-Kreismittel (48) weiterhin die genannten Ablenkkontroll-Kreismittel (44) umfassen.

3. Mikrodimensions-Meßapparat nach Anspruch 1, dadurch gekennzeichnet, daß die Datenverarbeitungs-Kreismittel (48) die Zustände von maximaler Änderungsgeschwindigkeit der Intensität des reflektierten Lichts durch aufeinanderfolgendes Berechnen von einer Mehrzahl von Differentialwerten aus dem Signal der photoempfindlichen Mittel (46) feststellen, wobei jeder Differentialwert das Differential der laufenden Änderungsgeschwindigkeit der Intensität des reflektierten Lichts repräsentiert, während der Lichtstrahl abtastend über die Fläche (42) des genannten Gegenstandes geführt wird, und durch Diskriminieren der Zustände der maximalen Änderungsgeschwindigkeit der Intensität korrespondierend zu den Spitzenwerten des auf diese Weise abgeleiteten Satzes von Differentialwerten.

4. Mikrodimensions-Meßapparat nach Anspruch 1, dadurch gekennzeichnet, daß die Datenverarbeitungs-Kreismittel (48) die Zustände der maximalen Änderungsgeschwindigkeit der Intensität des reflektierten Lichts durch Ableiten eines Satzes von Werten feststellen, die einer kontinuierlich variierenden mathematischen Funktion entsprechen, welche eine Annäherung an einen Satz von Werten der reflektierten Lichtintensität vornimmt, welche durch das Signal der Photosensor-Mittel (46) repräsentiert werden, und welche erzeugt werden, wenn der Lichtstrahl abtastend über die Oberfläche (42) des Gegenstandes geführt wird und durch Verarbeiten der mathematischen Funktion, um die Bedingungen der maximalen Änderungsgeschwindigkeit dieser Werte zu bestimmen.

5. Mikrodimensions-Meßapparat nach Anspruch 1, dadurch gekennzeichnet, daß die Lichtquelle (11) einen Laser umfaßt.

6. Mikrodimensions-Meßapparat nach Anspruch 1, dadurch gekennzeichnet, daß die annähernde Stellung der genannten Kanten gemessen wird, bevor die Messung mit dem genannten Mikrodimensions-Meßapparat erfolgt und diese Stellung durch die Ablenk-Kontrollkreismittel (44) gespeichert wird und daß die genannten Ablenk-Kontrollkreismittel (44) danach wirksam werden, um die Änderungsgeschwindigkeit der Ablenkspannung in Bezug auf die Zeit relativ langsam zu variieren, während der Lichtstrahl abtastend über die Fläche (42) des Gegenstandes in der Nähe jeder der genannten Kanten geführt wird, und um die Veränderungsgeschwindigkeit der Ablenkspannung relativ rasch zu variieren, während der Lichtstrahl abtastend über Bereiche der Oberfläche (42) des Gegenstandes geführt wird, welche im Abstand von den Kantenstellungen liegen.

7. Mikrodimensions-Meßapparat nach Anspruch 6, dadurch gekennzeichnet, daß die Ablenk-Kontrollkreismittel (44) die Ablenkspannung in aufeinanderfolgenden Schritten von relativ kleiner Größe variieren, während der Lichtstrahl über die Oberfläche (42) des Gegenstandes in der Nachbarschaft jeder der genannten Kanten geführt wird, und in aufeinanderfolgenden Schritten von relativ großer Weite zu variieren, während der Lichtstrahl über Abschnitte der Oberfläche (42) des Gegenstandes abtastend geführt wird, welche sich im Abstand von den genannten Kantenstellungen befinden.

8. Mikrodimensions-Meßapparat nach Anspruch 1, weiterhin gekennzeichnet durch optische Isolatormittel (39), die zwischen den zweiten und den dritten optischen Elementmitteln (38, 40) angeordnet sind und zwar so, daß sie den von den zweiten optischen Elementmitteln (38) austretenden Lichtstrahl so übertragen, daß dieser in die dritten optischen Elementmittel (40) eintritt und um das reflektierte Licht von der Oberfläche (42) des Gegenstandes, das von dem dritten optischen Elementmittel (40) austritt, auf die genannten Photosensor-Mittel (46) zu reflektieren.

**Revendications**

1. Appareil de mesure micro-dimensionnelle destiné à mesurer la distance entre au moins deux bords formés sur la surface (42) d'un objet, caractérisé par un élément acousto-optique (22); des moyens de commande d'élément acousto-optique (24) destiné à générer des ondes progressives acoustiques ultrasonores dans le dit élément acousto-optique (22); un circuit de génération de tension de déviation (26) couplé aux dits moyens de commande d'élément acousto-optique (24) afin d'y appliquer une tension de déviation telle que le niveau de la dite tension de déviation détermine la fréquence des dites ondes progressives acoustiques ultrasonores;

une source de lumière (11) destinée à générer un faisceau lumineux, et un premier groupe optique (36) servant à mettre en forme et à diriger le dit faisceau lumineux de façon à passer au travers du dit élément acousto-optique (22) et être ainsi dévié d'un angle qui est déterminé par la fréquence des dites ondes progressives acoustiques ultrasonores;

un second groupe optique (38) disposé de façon à modifier la forme du dit faisceau lumineux sortant du dit élément acousto-optique (22);

un troisième groupe optique (40) disposé de façon à diriger le dit faisceau lumineux sortant du dit second groupe optique (38) sur la dite surface de corps (42) et à focaliser le dit faisceau lumineux afin de former un point de lumière ayant un diamètre microscopique sur la dite surface de corps (42);

des moyens photo-détecteurs (46) disposés de façon à recevoir la lumière réfléchie par la dite surface de corps (42), et qui résulte du dit faisceau lumineux qui la frappe, et afin de produire un signal électrique indicatif de l'intensité de la dite lumière réfléchie;

un circuit de commande de déviation (44) destiné à commander le dit circuit de génération de tension de déviation (26) de façon à modifier le niveau de la dite tension de déviation à une vitesse prédéterminée pour modifier de façon correspondante la fréquence des dites ondes progressives acoustiques ultrasonores et modifier ainsi le dit angle de déviation du dit faisceau lumineux pour de ce fait balayer le dit faisceau lumineux sur la dite surface de corps (42) à une vitesse prédéterminée; et

un circuit de traitement de données (48) destiné à traiter le dit signal provenant des dits moyens photodétecteurs (46) de façon à détecter des conditions de vitesse maximum de variation d'intensité de la dite lumière réfléchie, les dites conditions correspondant respectivement au dit faisceau lumineux frappant successivement les dits bords, et destiné à mesurer la distance entre les deux dits bords telle que représentée par la différence entre les valeurs de la dite tension de déviation correspondant respectivement aux dites conditions de vitesse maximum de variation d'intensité de lumière réfléchie.

2. Appareil de mesure micro-dimensionnelle selon la revendication 1, caractérisé en ce que le dit circuit de traitement de données (48) comprend en outre le dit circuit de commande de déviation (44).

3. Appareil de mesure micro-dimensionnelle selon la revendication 1, caractérisé en ce que le dit circuit de traitement de données (48) détecte les dites conditions de vitesse maximum de variation d'intensité de la dite lumière réfléchie en calculant successivement à partir du signal des dits moyens photo-détecteurs (46) une pluralité de valeurs différentielles représentant chacune la différentielle de la vitesse courante de variation de la dite intensité de lumière réfléchie lorsque le dit faisceau lumineux balaye la dite surface de corps (42), et en discriminant les dites conditions de vitesse maximum de variation d'intensité correspondant aux valeurs de crête de l'ensemble de valeurs différentielles ainsi dérivées.

4. Appareil de mesure micro-dimensionnelle selon la revendication 1, caractérisé en ce que le dit circuit de traitement de données (48) détecte les dites conditions de vitesse maximum de variation d'intensité de la dite lumière réfléchie en dérivant un ensemble de valeurs correspondant à une fonction mathématique à variation continue qui approxime un ensemble de valeurs de la dite intensité de lumière réfléchie représentée par le dit signal des dits moyens photo-détecteurs (46) généré lorsque le faisceau lumineux balaye la dite surface de corps (42), et en traitant la dite fonction mathématique afin d'en déterminer les conditions de vitesse maximum de variation.

5. Appareil de mesure micro-dimensionnelle selon la revendication 1, caractérisé en ce que la dite source de lumière (11) comporte un laser.

6. Appareil de mesure micro-dimensionnelle selon la revendication 1, caractérisé en ce que la position approximative des dits bords est mesurée préalablement à la mesure au moyen du dit appareil de mesure micro-dimensionnelle et est mémorisée par le dit circuit de commande de déviation (44), et dans lequel le dit circuit de commande de déviation (44) agit ensuite pour modifier la vitesse de variation de la dite tension de déviation relativement lentement dans le temps lorsque le dit faisceau de lumière balaye la surface de corps (42) au voisinage de chacun des dits bords et pour modifier la vitesse de variation de la dite tension be déviation relativement rapidement dans le temps lorsque le dit faisceau de lumière balaye la surface de corps (42) à l'écart des dites positions de bord.

7. Appareil de mesure micro-dimensionnelle selon la revendication 6, caractérisé en ce le dit circuit de commande de déviation (44) commande la dite tension de déviation de façon à la modifier en pas successifs de relativement faible amplitude lorsque le dit faisceau de lumière balaye la surface de corps (42) au voisinage de chacun des dits bords et en pas successifs de relativement grande amplitude lorsque le dit faisceau de lumière balaye la surface de corps (42) à l'écart des dites positions de bord.

8. Appareil de mesure micro-dimensionnelle selon la revendication 1, caractérisé en outre par des moyens d'isolation optique (39) disposés entre les dits second et troisième groupes optiques (38, 40) pour transmettre le dit faisceau de lumière qui sort du dit second groupe optique (38) pour entrer dans le dit troisième groupe optique (40), et pour réfléchir la dite lumière réfléchie par la dite surface de corps (42), et qui sort du dit troisième groupe optique (40), sur les dits moyens photo-détecteurs (46).

# Fig. 1

# Fig. 2

ACOUSTO-OPTICAL ELEMENT

ACOUSTO-OPTICAL ELEMENT DRIVE CIRCUIT

DEFLECTION VOLTAGE GENERATING CIRCUIT

EP 0 159 800 B1

*Fig. 3*

ACOUSTO-OPTICAL ELEMENT

35 OPTICAL SYSTEM

OPTO-ISOLATOR

LASER 11

36

22

38 39

40

42

ACOUSTO-OPTICAL ELEMENT DRIVE CIRCUIT

24

PHOTO SENSOR

46

50

52 54

DEFLECTION CONTROL SYSTEM

44

26

48

58 56 60

DEFLECTION VOLTAGE GENERATING CIRCUIT

DATA PROCESSING CIRCUIT

## Fig. 4A

## Fig. 4B

## Fig. 5A

## Fig. 5B

## Fig. 6

*Fig. 7A*

*Fig. 7B*

*Fig. 7C*

*Fig. 7D*